# EUROPÄISCHE PATENTANMELDUNG

(11) **EP 0 830 041 A2**
(43) Veröffentlichungstag der Anmeldung: **18.03.1998**
(21) Anmeldenummer: 97114258.3
(22) Anmeldetag: 19.08.1997
(51) Int. Cl.: H04Q 7/30, H04Q 7/38

(54) **Funksystem und Verfahren zu dessen Betrieb**

(30) Priorität: 06.09.1996 DE 19636196
(71) Anmelder: Lucent Technologies Network Systems GmbH, 90411 Nürnberg (DE)
(72) Erfinder: Eizenhöfer, Alfons, Prof. Dr., 90518 Altdorf (DE)
(74) Vertreter: Zwirner, Gottfried, Dipl.-Ing. Dipl.-W.-Ing.

(57) **Zusammenfassung**

In einem Funksystem (1), z. B. im GSM-Mobilfunksystem, ist eine Anzahl von Feststationen (2) über eine Schnittstellenleitung (5) mit einer Feststationssteuereinrichtung (3) verbunden. Um einen besonders hohe Leitungsauslastung zu ermöglichen, ist jeder Feststation (2) ein Koppelelement (6) zum variablen Verbinden eines Funkkanals (FKₙ) der Feststation (2) mit einem Nutzkanal (NKₘ) der Schnittstellenleitung (5) zugeordnet. Dabei wird bei jedem Verbindungsaufbau einem Funkkanal (FKₙ) ein Nutzkanal (NKₘ) erneut zugeordnet.

## Beschreibung

Die Erfindung bezieht sich auf ein Funksystem mit einer Anzahl von Feststationen, die über eine Schnittstellenleitung mit einer Feststationssteuereinrichtung verbunden sind. Sie bezieht sich weiter auf ein Verfahren zu dessen Betrieb.

Ein Funksystem mit einer leitungsorientierten Übertragung von Sprach- oder Signaldaten umfaßt üblicherweise eine Anzahl von Fest- oder Basisstationen BTS (Base Transceiver Station), von denen jede Sende- und Empfangseinrichtungen für häufig mehrere Funkkanäle enthält. Sie umfaßt weiter diese Funkkanäle verwaltende und Verbindungen durchschaltende Vermittlungs- oder Feststationssteuereinrichtungen BSC (Base Station Controller) sowie Funkvermittlungsstellen MSC (Mobile Switching Center) als Vermittlungsstellen hoher Leistungsfähigkeit. Diese realisieren den Übergang in andere Telekommunikationsnetze, wie z. B. in das öffentliche Telefonnetz PSTN (Public Switched Telephone Network), in das ISDN-Netz oder dergleichen. In manchen Funksystemen sind die Funktionen des BSC und des MSC in einer Einheit zusammengefaßt.

Bei analogen Schmalbandsystemen umfaßt sowohl die Feststation als auch eine Schnittstelle zwischen diesen Feststationen und den diesen zugeordneten Feststationssteuereinrichtungen einzelne Kanäle, während bei digitalen Systemen in der Feststation mehrere Funkkanäle durch ein sogenanntes Zeitmulitiplexverfahren TDMA (Time Division Multiplex Access) zu einer Einheit zusammengefaßt werden. Dieses Verfahren wird z. B. in dem paneuropäischen GSM-System (Global System for Mobile Communication) realisiert. Bei diesem GSM-System handelt es sich um ein Mobilfunksystem, daß zur Abdeckung eines großen Versorgungsbereichs als zellulares Funknetz konzipiert ist. Dabei ist in jeder Zelle des Funknetzes mindestens eine ortsfeste Feststation vorgesehen, die die Funkverbindung zu den in der jeweiligen Funkzelle befindlichen Mobilstationen aufrecht erhält. Die Datenübertragung auf einer sogenannten A_{bis}-Schnittstelle zwischen den Feststationen und den Feststationssteuereinrichtungen erfolgt üblicherweise durch ein Multiplexsystem, daß z. B. auf einer 2 Mbit/s-Strecke 32 Kanäle mit jeweils 64 kbit/s realisiert. Von diesen 32 Kanälen wird ein Kanal zur Synchronisation benötigt, so daß 31 Kanäle für die Übertragung von Sprach- oder Signaldaten genutzt werden können.

Eine Besonderheit der digitalen Funksysteme ist die Sprachkodierung, die es ermöglicht, Sprache im sogenannten DECT-System mit 32 kbit/s und im GSM-System mit 16 kbit/s oder 8 kbit/s zu übertragen. Dadurch können 2, 4 oder 8 Kanäle zu einem 64 kbit/s-Kanal zusammengefaßt und somit Leitungskosten eingespart werden. So können z. B. über eine 2 Mbit/s-Strecke bis zu 124 Sprachkanäle übertragen werden, wenn 4 Kanäle mit jeweils 16 kbit/s zu einem 64 kbit/s-Kanal zusammengefaßt sind. Dies ist ein häufiger Fall im Mobilfunk.

Da eine Feststation üblicherweise lediglich wenige Funkkanäle enthält und somit nur einige der von einer Schnittstellenleitung mit 2 Mbit/s zur Verfügung gestellten Nutzkanäle benötigt, werden für jede Feststation nur eine der Anzahl ihrer Funkkanäle entsprechende Anzahl von Nutzkanälen aus der 2 Mbit/s-Strecke herausgeführt. Die nicht belegten Nutzkanäle werden dann zur nächsten Feststation weitergeführt usw.. Diese Technik des Auffädelns von Feststationen an einer solchen Schnittstellenleitung oder Strecke wird auch als Multidrop bezeichnet. Dabei erfolgt das Herausführen von Nutzkanälen aus der Schnittstellenleitung und das Weiterleiten der restlichen Nutzkanäle mittels den Feststationen zugeordneten Multiplexern, die auch als Cross-Connect bezeichnet werden. Die Multiplexer werden bei der Installation konfiguriert, indem ein bestimmter Funkkanal einer bestimmten Feststation an einen bestimmten Nutzkanal der A_{bis}-Schnittstelle angeschlossen wird. Nachteilig bei diesem Multidrop-Verfahren ist die verkehrstechnisch unökonomische Nutzung der 2-Mb/s-Strecke der A_{bis}-Schnittstelle aufgrund eines schwachen Bündeleffekts bei Funkzellen mit geringer Kanalzahl. Dies soll an dem folgenden Beispiel verdeutlicht werden:

Viele Funkzellen in einem GSM-System sind mit z. B. 15 Nutzkanälen auf der Funkschnittstellenseite zur Übertragung von Sprach- oder Signaldaten bestückt. Der von einer solchen Funkzelle im Mittel bedienbare Verkehr berechnet sich nach der sogenannten Erlang-B-Formel. Nimmt man eine Blockierwahrscheinlichkeit von 1% an, so ist der Verkehrswert 8,1 Erlang oder 54 % des maximalen Verkehrs. Die Funkkanäle sind somit auch in der Hauptverkehrsstunde fast die Hälfte der Zeit nicht belegt. Da die Belegung der Funkkanäle durch die feste Zuordnung zu den Nutzkanälen auch die Belegung der Schnittstellenleitung bestimmt, führt somit die A_{bis}-Schnittstelle ebenfalls im Mittel lediglich 54 % des maximal möglichen Verkehrs.

Der Erfindung liegt daher die Aufgabe zugrunde, ein Funksystem der eingangs ganannten Art derart zu verbessern, daß eine möglichst hohe Leitungsauslastung bei gleichzeitig hoher Ausfallsicherheit gewährleistet ist. Desweiteren soll ein besonders effektives Verfahren zum Betreiben eines solchen Funksystems angegeben werden.

Bezüglich des Funksystems wird die genannte Aufgabe erfindungsgemäß gelöst, indem der oder jeder Feststation ein Koppelelement zugeordnet ist, daß bei einem Verbindungsaufbau einen Funkkanal der Feststation mit einem Nutzkanal der Schnittstellenleitung verbindet.

Die Erfindung geht dabei von der Überlegung aus, daß eine verbesserte Leitungsauslastung durch Aufhebung der festen Zuordnung zwischen den Funkkanälen der Feststationen und den Nutzkanälen der Schnittstellenleitung auf der A_{bis}-Schnittstelle erfolgen kann. Statt dessen sollte die Zuordnung zwischen den Funkkanälen und den Nutzkanälen bei jeder Kanalbelegung neu einzustellen und somit flexibel sein. Dadurch wird erreicht, daß die Belegung der Schnittstellenleitung lediglich von deren Kapazität abhängig ist.

Bei einem derartigen Funksystem mit entsprechenden Koppelelementen zwischen den Basisstationen und der Schnittstellenleitung kann eine derartige Vielzahl von Feststationen an die Schnittstellenleitung angeschaltet sein, daß die Summe aller Funkkanäle der Feststationen größer ist als die Anzahl der Nutzkanäle der Schnittstellenleitung.

Um auch bei Ausfall eines Streckenabschnitts den Funkbetrieb zumindest eingeschränkt weiterführen zu können, ist die Schnittstellenleitung vorteilhafterweise als Leitungsschleife ausgebildet. Dabei ist die Schnittstellenleitung, an der die Feststationen angeschlossen sind, an die Feststationssteuereinrichtung zurückgeführt. Die bei einem Leitungsausfall abgeschnittenen Feststationen können dann über die Schleifenrückführung versorgt werden. Im Vergleich zur bekannten Anordnung kann ein solcher schleifenförmiger Leitungsring bei gleicher Leitungskapazität bis zur dreifachen Verkehrsmenge tragen. Durch die dynamische Zuordnung der Funkkanäle zu den Nutzkanälen ist es dabei bei gleichzeitig vergleichsweise hoher Leitungssausnutzung möglich, den Verkehr bei Ausfall eines Streckenabschnittes in allen Funkzellen zu reduzieren und so einen Totalausfall einiger Funkzellen zu verhindern. Durch eine geeignete Reduzierung der Anzahl der Feststationen innerhalb einer solchen Leitungsschleife kann ein Netzbetreiber auch im seltenen Fall eines Leitungsausfalls die Blockierrate z. B. auf maximal 5 % steigern, um damit ein Optimum an Leitungsauslastung und Ausfallsicherheit zu wählen.

Bezüglich des Verfahrens wird die genannte Aufgabe erfindungsgemäß gelöst durch die Merkmale des Anspruchs 4. Vorteilhafte Weiterbildungen sind Gegenstand der auf diesen rückbezogenen Unteransprüche.

Dabei wird eine variable Kanalbelegung zwischen Kanälen auf der sogenannten U-Funkschnittstelle und solchen auf der A_{bis}-Scnittstelle möglich durch eine Aufhebung der festen Zuordnung zwischen Funkkanälen der Feststationen und Nutzkanälen auf der A_{bis}-Scnittstelle. Mit anderen Worten: bei jedem Verbindungs- oder Gesprächsaufbau wird einem Funkkanal ein Nutzkanal erneut zugewiesen. Dazu werden zweckmäßigerweise zunächst ein freier Funkkanal sowie ein freier Nutzkanal ausgewählt. Anschließend wird der Nutzkanal initialisiert und erst danach mit dem Funkkanal verbunden.

Zur Initialisierung des Nutzkanals wird eine Meldung, z. B. 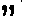 Channel Aktivation", an die Feststation übertragen, wobei die Übertragung vorteilhafterweise über einen separaten Signalisierungskanal erfolgt. Dazu wird zweckmäßigerweise bereits bei Inbetriebnahme einer Feststation eine Anzahl von physikalischen oder logischen Signalisierungskanälen zwischen der Feststation und der Feststationssteuereinrichtung fest eingerichtet.

Die mit der Erfindung erzielten Vorteile bestehen insbesondere darin, daß durch einen variable Zuordnung der Funkkanäle der Feststationen zu den Nutzkanälen eine größtmögliche Flexibilität und eine besonders hohe Leitungsauslastung erreicht wird. Bei Ausbildung der Schnittstellenleitung als Leitungsschleife mit Rückführung zur Feststationssteuereinrichtung ist darüber hinaus eine besonders hohe Ausfallsicherheit gewährleistet. Aufgrund der erhöhten Auslastung der Schnittstellenleitung können vergleichsweise viele Feststationen an eine 2-Mb/s-Strecke angeschlossen werden, so daß - beispielsweise bezogen auf ein Land - sowohl die Anzahl als auch die Gesamtlänge der benötigten Leitungsstrecken sinkt.

Ausführungsbeispiele der Erfindung werden anhand einer Zeichnung näher erläutert. Darin zeigen:
- Fig.1: schematisch den Aufbau eines Funksystems,
- Fig.2: eine erfindungsgemäße Ankoppelung von Feststationen an eine Feststationssteuereinrichtung und
- Fig.3: die Ankoppelung von Feststationen an eine Feststationssteuereinrichtung über eine Leitungsschleife.

Einander entsprechende Teile sind in allen Figuren mit den gleichen Bezugszeichen versehen.

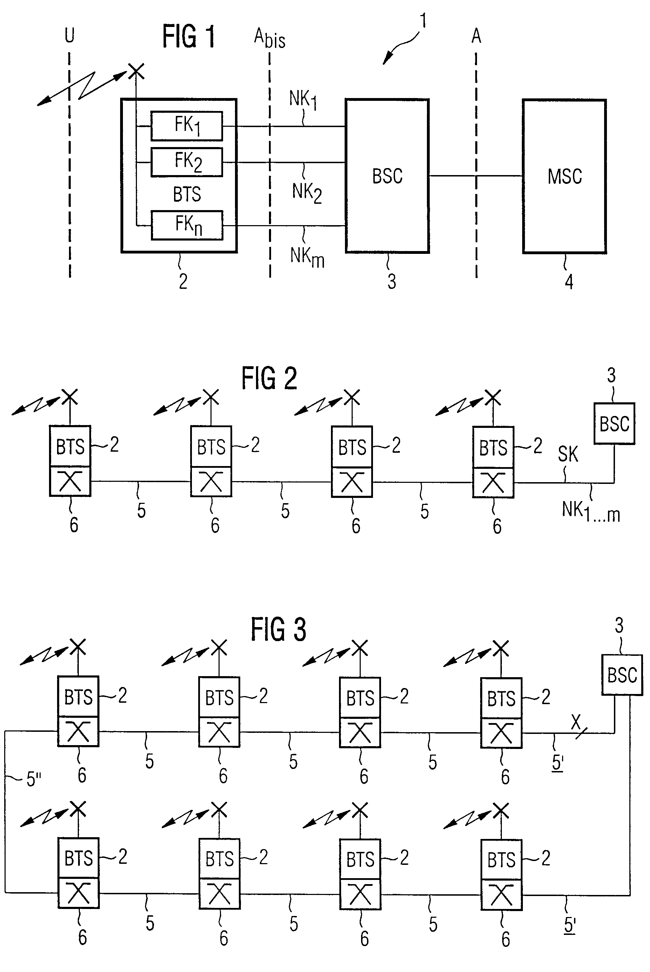

Fig.1 zeigt die Architektur eines Funksystems 1 mit leitungsorientierter Übertragung von Sprache oder Daten. Es umfaßt eine Anzahl von Basis- oder Feststationen 2, sogenannten BTS (Base Transceiver Station), und Feststationssteuereinrichtungen 3, sogenannten BSC (Base Station Controller) sowie Vermittlungseinrichtungen 4, sogenannten MSC (Mobile Switching Center), von denen jeweils nur eine dargestellt ist. Die Feststation 2 enthält Sende- und Empfangseinrichtungen für mehrere Funkkanäle FK_{1...n}, die von der Feststationssteuereinrichtung 3 verwaltet werden.

Die Datenübertragung zwischen der zentralen Feststationssteuereinrichtung 3 und den mit dieser verbundenen Feststationen 2 erfolgt über eine sogenannte A_{bis}-Schnittstelle für eine Übertragungsstrecke mit mehreren Nutzkanälen NK_{1...m}. Der Übergang von der Vemittlungseinrichtung oder Funkvermittlungsstelle 4 zur Feststationssteuereinrichtung 3 ist als sogenannte A-Schnittstelle genormt. Die Einbindung des Funksystems 1 in ein globales Funknetzsystem, beispielsweise in das GSM-Netz mit zellularem Mobilfunksystem, erfolgt über eine sogenannte U-Schnittstelle. Der strukturelle Aufbau des GSM-Mobilfunksystems (Global System for Mobile Communication) ist z. B. in der europäischen Patentanmeldung EP 0 611 006 beschrieben.

Fig. 2 zeigt eine Schnittstellenleitung 5 an der A_{bis}-Schnittstelle zur Ankoppelung einer Anzahl von Feststationen 2 an die diesen zugeordnete Feststationssteuereinrichtung 3. Ein über die Schnittstellenleitung 5 übertragenes Signal ist üblicherweise ein Zeitmulitplexsignal, bei dem digitalisierte Fernsprechsignale zu einem Bitstrom von 2,048 Mbit/s zusammengefaßt werden. Sie Schnittstellenleitung 5 umfaßt somit im Ausführungsbeispiel 32 Zeitschlitze mit einer Datenrate von jeweils 64 Kbit/s. Einer dieser 32 Zeitschlitze wird als Signalisierungskanal SK zur Übertragung von Meldungen an die übrigen Nutz- oder Datenkanäle verwendet, so daß 31 Nutzkanäle NK_{1...m} für die Übertragung von Sprache oder Daten verbleiben. Während jeder Nutzkanal NKₘ für die Übertragung von Sprache oder Daten zu jeder Zeit stets frei zugeordnet werden kann, kann der Signalisierungskanal SK bereits bei der Inbetribnahme der Feststationen 2 fest eingerichtet werden.

Bei einem derartigen digitalen Funksystem 1 können zur Einsparung von Leitungskosten auch mehrere Nutzkanäle NK_{1...m} zusammengefaßt werden. Faßt man z. B. 4 Nutzkanäle mit jeweils 16 Kbit/s zu einem 64-Kbit/s-Kanal zusammen, so können auf der A_{bis}-Schnittstelle über die Schnittstellenleitung 5 insgesamt 31 × 4 = 124 Sprach- oder Nutzkanäle NK_{1...m} übertragen werden.

Um eine besonders hohe Ausnutzung dieser Schnittstellenleitung 5 zu erreichen, ist jede Feststation 2 über ein Koppelelement 6, vorzugsweise in Form eines sogenannten Switch, mit der Schnittstellenleitung 5 verbunden. Jedes in der Art einer Vermittlungseinrichtung aufgebaute Koppelelement 6 ermöglicht der jeweiligen Feststation 2 den Zugriff auf jeden Nutzkanal Nkₘ der Schnittstellenleitung 5. Eine feste Zuordnung zwischen den Funkkanälen FK_{1...n} der Feststationen 2 und den Nutzkanälen NK_{1...m} auf der A_{bis}-Schnittstelle ist somit aufgehoben. Mittels der Koppelelemente 6 läßt sich die Zuordnung zwischen einem Funkkanal FKₙ auf der Funkschnittstelle U und einem Nutzkanal NKₘ auf der A_{bis}-Schnittstelle bei jeder Kanalbelegung neu einstellen.

Bei einem Verbindungsaufbau, z. B. bei einem Gesprächsaufbau, sucht die Feststationssteuereinrichtung 3 sowohl einen freien Funkkanal FKₙ einer betroffenen Feststation 2 als auch einen freien Nutzkanal NKₘ der A_{bis}-Schnittstelle auf der Schnittstellenleitung 5 aus. Anschließend wir dieser Nutzkanal NKₘ durch eine Meldung, beispielsweise durch die Meldung 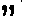 Channel Aktivation", initialisiert. Zur Übertragung dieser Meldung wird der ausgewählte Nutzkanal NKₘ auf der A_{bis}-Schnittstelle nicht benötigt, da dieser Meldungsaustausch über den gesonderten Signalisierungskanal SK erfolgt. Mit dieser Meldung wird der betreffenden Feststation 2 die Nummer des Nutzkanals NKₘ der Schnittstellenleitung 5 auf der A_{bis}-Schnittstelle mitgeteilt. Die Feststation 2 kann nun den Funkkanal FKₙ mit dem Nutzkanal NKₘ über das Koppelelement 6 verbinden.

Bei einer Schnittstellenleitung 5 für einen Bitstrom von 2 Mbit/s für die A_{bis}-Schnittstelle mit 124 Nutzkanälen NKₘ mit jeweils 16 Kbit/s kann die Schnittstellenleitung 5 im Mittel 106,8 Erlang Verkehr aufnehmen und ist somit zu 86 % ausgelastet.

Mit diesem Funksystem 1 läßt sich ein besonders ausfallsicheres Konzept realisieren. Dazu zeigt Fig.3 eine in Form einer Leitungsschleife 5' ausgebildete Schnittstellenleitung, die quasi aus zwei parallel verlaufenden Schnittstellenleitungen 5 mit jeweils der gleichen Anzahl angekoppelter Feststationen 2 aufgebaut ist. Dabei sind die Schnittstellenleitungen 5 an deren der Feststationssteuereinrichtung 3 gegenüberliegenden Enden über eine Verbindungsleitung 5*''* miteinander verbundenen. Somit sind zwei 2-Mbit/s-Strecken an die Feststationssteuereinrichtung 3 angeschlossen, wobei jede der Strecken oder Schnittstellenleitungen 5 zu 86 % ausgelastet ist. Die Leitungsschleife 5*'* trägt somit bei gleicher Leitungslänge die dreifache Verkehrsmenge im Vergleich zur derzeitigen Anordnung.

Für den Fall, daß die Schnittstellenleitung 5*'* an einer Stelle, beispielsweise an einer aüßerst unerwünschten Stelle X ausfällt, so kann nicht der gesamte Verkehr über die Leitungsschleife 5*'* geführt werden, so daß erhöht Blockierungen auftreten. Durch die dynamische Zuordnung der Funkkanäle FKₙ zu den Nutzkanälen NKₘ ist es jedoch möglich, den Verkehr in allen den Feststationen 2 zugeordneten Funkzellen zu reduzieren und somit einen Totalausfall einiger Funkzellen zu verhindern.

### Bezugszeichenliste

- 1: Funksystem
- 2: Feststation
- 3: Feststationssteuereinrichtung
- 4: Vermittlungsseinrichtung / Funkvermittlungsstelle
- 5: Schnittstellenleitung
- 6: Koppelelement
- A,A_{bis},U: Schnittstelle
- FKₙ: Funkkanal
- NKₘ: Nutzkanal
- SK: Signalisierungskanal

## Patentansprüche

1. Funksystem mit einer Anzahl von Feststationen, die über eine Schnittstellenleitung (5) mit einer Feststationssteuereinrichtung (3) verbunden sind, wobei der oder jeder Feststation (2) ein Koppelelement (6) zugeordnet ist, das bei einem Verbindungsaufbau einen Funkkanal (FKₙ) der Feststation (2) mit einem Nutzkanal (NKₘ) der Schnittstellenleitung (5) verbindet.

2. Funksystem nach Anspruch 1, bei dem die Summe aller Funkkanäle (FKₙ) der Feststationen (2) größer ist als die Anzahl der Nutzkanäle (NKₘ) der Schnittstellenleitung (5).

3. Funksystem nach Anspruch 1 oder 2, bei dem die Schnittstellenleitung (5) als Leitungsschleife (5') ausgebildet ist.

4. Verfahren zum Betreiben eines Funksystems mit einer Vielzahl von Funkkanälen (FKₙ) in einer Anzahl von Feststationen (2), die über eine Anzahl von Nutzkänalen (NKₘ) einer Schnittstellenleitung (5) mit einer Feststationssteuereinrichtung (3) verbindbar sind, wobei bei jedem Verbindunsaufbau einem Funkkanal (FKₙ) ein Nutzkanal (NKₘ) zugeordnet wird.

5. Verfahren nach Anspruch 4, wobei zunächst ein freier Funkkanal (FKₙ) und ein freier Nutzkanal (NKₘ) ausgewählt werden, und wobei anschließend der Nutzkanal (NKₘ) initialisiert und mit dem Funkkanal (FKₙ) verbunden wird.

6. Verfahren nach Anspruch 5, wobei zur Initialisierung des Nutzkanals (NKₘ) eine Meldung an die Feststation (2) des ausgewählten Funkkanals (FKₙ) übertragen wird.

7. Verfahren nach Anspruch 6, wobei die Übertragung der Meldung (CA) über einen separaten Signalisierungskanal (SK) der Schnittstellenleitung (5) erfolgt.

8. Verfahren nach einem der Ansprüche 4 bis 7, wobei bei Inbetriebnahme der oder jeder Feststation (2) mindestens ein Signalisierungskanal (SK) zwischen der Feststation (2) und der Feststationssteuereinrichtung (3) eingerichtet wird.
